# EUROPEAN PATENT APPLICATION

(11) **EP 4 249 346 A1**
(43) Date of publication of application: **27.09.2023**
(21) Application number: 23163269.6
(22) Date of filing: 21.03.2023
(51) Int. Cl.: B61L 15/00, B60L 50/15, B61C 3/02, B61L 27/16

(54) **SYSTEM, TRAIN, REMOTE CONTROL CENTRE, AND METHOD**

(30) Priority: 23.03.2022 GB 202204079
(71) Applicant: Hitachi Rail Limited, London EC4M 7AW (GB)
(72) Inventor: DAUTEL, Christopher, London, EC1N 2PB (GB)
(74) Representative: Mewburn Ellis LLP

(57) **Abstract**

A system for managing the operation of trains on a railway network. The system comprises: a train, including a control system which is configured to operate the train in each of two power modes: a hybrid mode in which power is provided to the one or more traction motors from an on-board generator assisted by one or more on-board electrical storage system, and a battery-only mode where power is provided to the one or more traction motors just from the one or more on-board electrical storage systems; and a remote control centre configured to transmit, to the control system of the train, operating data defining one or more regions of the railway network in which the train should operate in a given power mode of the two power modes.

## Description

### Related applications

The present application claims priority to, and the benefit of, GB2204079.4 filed 23 March 2022 (23/03/2022), the contents of which are incorporated herein by reference in their entirety.

### Field of the Invention

The present invention relates to a system for managing the operation of one or more trains on a railway network, a train, a remote control centre, and a method of managing the operation of one or more trains on a railway network.

### Background

Conventional bi-modal trains are configured to operate two different drive modes in which the train propulsion systems receive electrical power from two different configurations of power sources. The first, externally powered, drive mode is provided on electrified railway lines which have an external power supply infrastructure. The second, self-powered, drive mode is provided on non-electrified railway lines. The bi-mode train can cross to and from electrified and non-electrified sections of the railway lines by changing between their two available drive modes.

In the externally powered drive mode, the bi-mode trains receive electrical power from the external power supply infrastructure via external current collectors for example pantographs which connect to overhead lines (OHL) or shoe gear which connect to live rails on the railway tracks.

In the self-powered drive mode, bi-mode trains receive electrical power from on-board power sources. Conventionally, bi-mode trains comprise on-board generator units (GUs), such as diesel engine-powered electricity generators, which generate the electrical power.

When a bi-mode train changes between its externally powered drive mode and its self-powered drive mode the control system manages the handover of the propulsion systems according to Automatic Power Change Over (APCO) routines A' and B'. EP 2689983 A proposes an APCO for a bi-mode train transitioning from an externally powered drive mode, which uses OHLs, to a self-powered drive mode which uses GUs.

Other trains have a hybrid self-powered drive system comprising GUs assisted by on-board energy storage systems (OBESSs), such as batteries. On conventional hybrid trains, GUs are used as the main source of motive power. The GUs are typically assisted by the OBESSs when the train is accelerating. The OBESSs contribute to overall improvements in energy consumption by enabling regenerative braking in which kinetic energy of the train is converted into regenerated electrical power for subsequent re-use.

However, conventional hybrid trains require that the GUs remain active at all times to provide motive power for the train and to power auxiliary systems. This contributes to greenhouse gas emissions and noise pollution, despite receiving assistance from the OBESSs in acceleration phases.

It is also desirous to decrease greenhouse gas emissions and noise pollution in around, for example, train stations, residential areas, and cities.

### Summary

Accordingly, in a first aspect, embodiments of the invention provide a system for managing the operation of one or more trains on a railway network, the system comprising:
a train, including a control system which is configured to operate the train in each of two power modes: a hybrid mode in which power is provided to the one or more traction motors from an on-board generator assisted by one or more on-board electrical energy storage systems, and a battery-only mode where power is provided to the one or more traction motors from just the one or more on-board electrical storage systems; and
a remote control centre configured to transmit, to the control system of the train, operating data defining one or more regions of the railway network in which the train should operate in a given power mode of the two power modes.

Such a system provides enhanced flexibility in operating the train on the railway network, whilst allowing greenhouse gas emissions and noise pollution to be reduced around, for example, train stations, residential areas, and cities.

The control system may be configured to operate the train in each of three power modes: the hybrid mode, the battery-only mode, and an over-head mode in which power is provided to one or more traction motors from an electrified section of the railway network. The remote control centre may therefore be configured to transmit, to the control system of the train, operating data defining one or more regions of the railway network in which the train should operate in a given power mode of the three power modes.

The control system may be configured to automatically operate the drive system of the train in each of the two or three power modes. That is, the control system may not await driver input, and instead it may transition between power modes without action from the driver.

The operating data defining the one or more regions may comprise a position and an associated distance from the position. The position may be a central position, around which the associated distance is to be applied to arrive at the defined region. For example the central position may correspond to a train station, and the region may be defined by applying the associated distance before and after the train station along the railway line. The associate distance may, in such examples, correspond to a total distance or a distance to be applied either before or after the central position. Alternatively, the position may be an end position, at which the associated distance ends to arrive at the defined region. For example, the end position may correspond to a train station and the associated distance may be applied before the train station such that the defined region ends at the train station. Further alternatively, the position may be a starting position, from which the associated distance starting to arrive at the defined region. For example, the starting position may correspond to a train station and the associated distance may be applied after the train station such that the defined region begins at the train station.

The control system of the train, in response to receiving the operating data, may be configured to convert the operating data into geographical coordinates along a path of the train. The control system may be configured to repeat the conversion according to each of a plurality of driving settings. One of the driving settings may be an economical driving setting, in which the control system increases, for example doubles, the associated distance from the position before converting the operating data into the geographical coordinates. One of the driving settings may be a fast driving setting, in which the control system decreases, for example to zero, the associated distance from the position before converting the operating data into the geographical coordinates. One of the driving settings may be a normal driving setting, in which the control system converts the operating data into the geographical coordinates without modifying the associated distance from the position. If the driving setting is a normal driving setting, but the state of charge of the OBESS is insufficient, the control system may transition to the hybrid power mode.

The control system in the train may be configured to determine whether a state of charge of the one or more electrical storage system is sufficient for the train to traverse a region in which it should operate in the battery-only mode according to the operating data. The control system may be further configured, after determining that the state of charge is insufficient to traverse the region in battery-only mode, to operate the train in the hybrid mode. Alternatively, the control system may be further configured, after determining that the state of charge is insufficient to traverse the region in battery-only mode,, to calculate a new region, from the data defining the one or more regions, in which the train should operate in the battery-only mode, the new region having the same position but a shortened distance from the position.

The train may be a push-pull type train, that is the locomotive elements of the train (the railway vehicles including one or more traction motors) may be located near the front of the train, near the rear of the train, or both. The system may include a plurality of trains. The remote control centre may be server, connected or connectable to the or each train via the internet or another network.

In a second aspect, embodiments of the invention provide a train for travelling on routes with and without external power supply infrastructure, the train including a control system configured to operate the train in each of two power modes:
a hybrid mode in which power is drawn from an on-board generator assisted by one or more on-board electrical storage systems, and
a battery-only mode where power is drawn only from the one or more on-board electrical storage systems,
wherein the train includes a database, the database containing data defining one or more regions of the railway network in which the train should operate in a given power mode of the two power modes.

The control system may be configured to operate the train in each of three power modes: the hybrid mode, the battery-only mode, and an over-head mode in which power is drawn from an electrified section of the railway network in which external power supply infrastructure is present. The database may therefore contain data defining one or more regions of the railway network in which the train should operate in a given power mode of the three power modes.

The control system may be configured to connected to a remote control centre, and to receive, from the remote control centre, operating data defining further regions of the railway network in which the train should operate in a given power mode of the two or three power modes. In response to receiving the operating data, the control system may be configured to convert the operating data into geographical coordinates along a path of the train. In some examples, the data stored in the database of the train may be operating data or may be data defining geographical coordinates along a path of the train. The control system may be configured to repeat the conversion according to each of a plurality of driving settings. One of the driving settings may be an economical driving setting, in which the control system increases, for example doubles, the associated distance from the position before converting the operating data into the geographical coordinates. One of the driving settings may be a fast driving setting, in which the control system decreases, for example to zero, the associated distance from the position before converting the operating data into the geographical coordinates. One of the driving settings may be a normal driving setting, in which the control system converts the operating data into the geographical coordinates without modifying the associated distance from the position.

The control system may be configured to determine whether a state of charge of the one or more electrical storage systems is sufficient for the train to traverse a region in which it should operate in the battery-only mode. The control system may be further configured, after determining that the state of charge is insufficient to traverse the region in battery-only mode, to operate the train in the hybrid mode. The control system may be further configured, after determining that the state of charge is insufficient to traverse the region in battery-only mode, to calculate a new region, from the data defining the one or more regions, in which the train should operate in the battery-only mode, the new region having the same position but a shortened distance from the position.

In a third aspect, embodiments of the invention provide a remote control centre configured to transmit, to a control system of a train, operating data defining one or more regions of the railway network in which the train should operate in a given power mode of two power modes, the two power modes including: a hybrid mode in which power is provided to the one or more traction motors from an on-board generator assisted by one or more on-board electrical storage systems, and a battery-only mode where power is provided to the one or more traction motors just from the one or more on-board electrical storage systems.

The operating data may define one or more regions of the railway network in which the train should operate in a given power mode of three power modes: the hybrid mode, the battery-only mode, and an over-head mode in which power is provided to one or more traction motors from an electrified section of the railway network.

The operating data defining the one or more regions may comprise a position and an associated distance from the position. The position may be a central position, around which the associated distance is to be applied to arrive at the defined region. For example the central position may correspond to a train station, and the region may be defined by applying the associated distance before and after the train station along the railway line. The associate distance may, in such examples, correspond to a total distance or a distance to be applied either before or after the central position. Alternatively, the position may be an end position, at which the associated distance ends to arrive at the defined region. For example, the end position may correspond to a train station and the associated distance may be applied before the train station such that the defined region ends at the train station. Further alternatively, the position may be a starting position, from which the associated distance starting to arrive at the defined region. For example, the starting position may correspond to a train station and the associated distance may be applied after the train station such that the defined region begins at the train station.

In a fourth aspect, embodiments of the invention provide a method of managing the operation of one or more trains on a railway network, a train of the one or more trains, including a control system which is configured to operate the train in each of two power modes: a hybrid mode in which power is provided to the one or more traction motors from an on-board generator assisted by one or more on-board electrical storage systems, and a battery-only mode where power is provided to the one or more traction motors just from the one or more on-board electrical storage systems, the method comprising:
transmitting, from a remote control centre to the control system of the train, operating data defining one or more regions of the railway network in which the train should operate in a given power mode of the two power modes.

The control system may be configured to operate the train in each of three power modes: the hybrid mode, the battery-only mode, and an over-head mode in which power is provided to one or more traction motors from an electrified section of the railway network.

Further aspects of the present invention provide: a computer program comprising code which, when run on a computer, causes the computer to perform the method of the fourth aspect; a computer readable medium storing a computer program comprising code which, when run on a computer, causes the computer to perform the method of the fourth aspect; and a computer system programmed to perform the method of the fourth aspect.

The invention includes the combination of the aspects and preferred features described except where such a combination is clearly impermissible or expressly avoided.

Optional features of the invention have been be set out. These are applicable singly or in any combination with any aspect of the invention.

### Brief Description of the Drawings

Embodiments of the invention will now be described by way of example with reference to the accompanying drawings in which:
Figure 1 shows a schematic of a drive system for a train;
Figure 2 shows a schematic of a system for managing the operation of one or more trains on a railway network;
Figure 3 is a flow chart of a method of updating a database on the train;
Figure 4 shows received data and converted data;
Figure 5 is a flow chart of a method of a switchover sequence of the train;
Figure 6 is a flow chart of a variation of the method of Figure 5;
Figure 7 shows a plot of state of charge against distance illustrating the method of Figure 6, together with a table illustrating the same;
Figure 8 shows a variation of the system of Figure 2.

### Detailed Description and Further Optional Features

Aspects and embodiments of the present invention will now be discussed with reference to the accompanying figures. Further aspects and embodiments will be apparent to those skilled in the art.

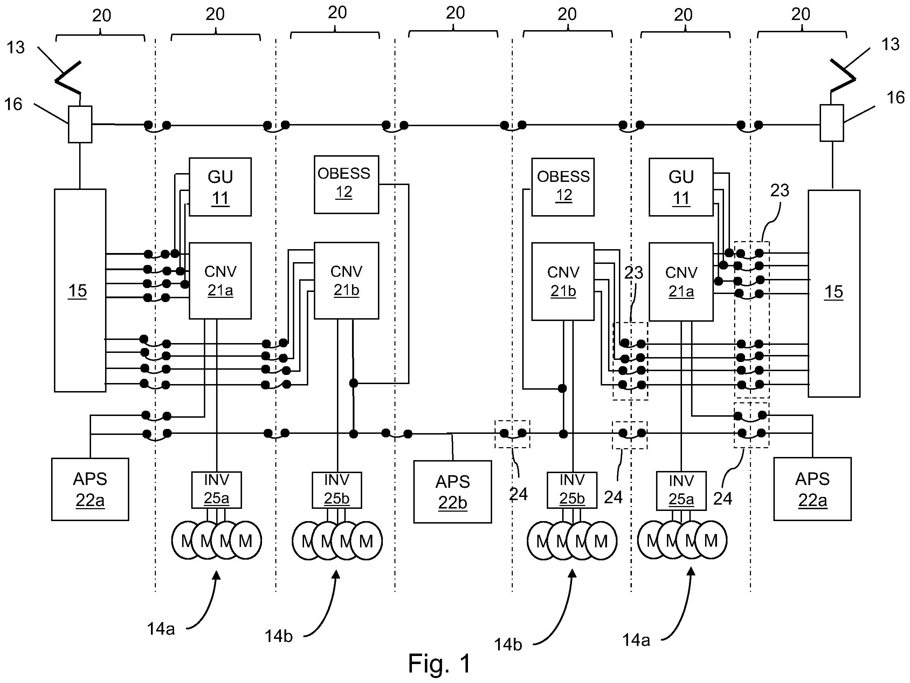

Figure 1 shows a schematic of the drive system for a train, sometimes referred to as a tri-mode train. The train is driven by traction motors 14a and 14b using electrical power provided by the external power supply infrastructure, or by generator units, GUs, 11 with optional support from the on-board energy storage systems, OBESSs, 12, or by the OBESSs alone according to the drive mode being provided by the control system.

External current collectors 13 are provided to connect to the external power supply infrastructure on electrified sections of the railway line. Typically, the external current collectors are roof-mounted pantographs, which are raised by the control system to connect to overhead lines (OHL) (not shown). However, they may be shoe gear provided beneath the train for connecting to live rails along the tracks. Main voltage transformers 15 are provided to adjust the voltage level between the external power supply infrastructure and the on-board systems. Vacuum circuit breakers (VCBs) 16, or similar, are provided to disconnect the pantographs from the main voltage transformers when they are not in use.

Typically, each GU 11 combines a diesel engine and an electricity generator powered by that engine to produce AC electrical power. However, other arrangements are possible. For example, the GUs could be fuel cells in which a fuel, such as hydrogen, is oxidised to generate DC electrical power. Each OBESS 12 is typically a battery system having an associated state of charge (SoC).

The train may comprise a series of coupled cars 20 in which, as shown in Figure 1, some cars contain respective GUs 11 and first traction motors 14a, and other cars contain respective OBESSs 12 and second traction motors 14b. Alternatively, the GUs and OBESSs may be housed in the same cars, along with their respective first and second traction motors.

Other cars are shown in Figure 1 which do not contain GUs or OBESSs, such as for example the lead and tail cars which typically carry the external current collectors 13 and house the main voltage transformers 15. Auxiliary power supply (APS) units 22a, 22b provided to power the train's auxiliary systems (i.e. power outlets, lights, doors, and air-conditioning systems etc.) may conveniently be located in cars without GUs and OBESSs.

First converter-inverter devices are provided on the cars with the GUs 11 and second converter-inverter devices are provided on the cars with the OBESSs 12. Each first converter-inverter device comprises a first converter circuit 21a and a first inverter circuit 25a joined to its converter circuit by a first DC link, the device providing three phase AC power from the first inverter circuit to drive respective first traction motors 14a. Similarly each second converter-inverter device comprises a second converter circuit 21b and a second inverter circuit 25b joined to its converter circuit by a second DC link, the device providing three phase AC power from the second inverter circuit to drive respective second traction motors 14b. The first and second converter circuits contain AC/DC converters to convert AC electrical power from the external current collectors 13 to DC electrical power. Moreover, in the case of the first converter circuits, these AC/DC converters can also convert AC electrical power from the GUs to DC electrical power. In the case of the second converter-inverter devices, the second DC-links can receive DC electrical power from the OBESSs.

Capacitors (not shown) help the first and second DC links to maintain constant DC voltages. When the DC links receive electrical power from the external current collectors 13 or the GUs 11 they are maintained at a first DC voltage and when DC links receive electrical power from the OBESSs 12 they are typically maintained at a second, different, DC voltage.

The control system manages the first 21a and second 21b converter circuits, and the first 14a and second 14b traction motors. Generally, the control system has a speed controller operable (e.g. by a driver) to select a target vehicle velocity which is converted into target torques for the traction motors. The control system adjusts the amount of electrical power supplied to the first and second traction motors to achieve the target vehicle velocity.

The APS units 22a, 22b receive DC electrical power from the first and second DC links, with the DC electrical power being conducted to neighbouring cars though inter-car DC electrical connectors 24. The control system can close such DC electrical connectors 24along connecting lines joining APS units as needed to enable sharing of DC electrical power between selected APS units, as discussed in more detail below. However, the control system can also open the DC electrical connectors 24 to electrically isolate the APS units from each other.

In the over-head mode, high voltage, single phase AC electrical power is obtained from the OHLs through the pantographs 13 and applied, via the closed VCBs 16, to the main voltage transformers 15. The resulting reduced voltage AC electrical power is supplied to the first 21a and second 21b converter circuits. The AC electrical power is conducted to neighbouring cars though inter-car AC electrical connectors 23. The AC electrical power is converted to DC electrical power in the first 21a and second 21b converter circuits. The DC electrical power is then conducted by the first and second DC links to the first 25a and second 25b inverter circuits which provide the three phase AC power required by the first 14a and second 14b traction motors. In this way the first and second traction motors can provide torque contributions using electrical power from the external power supply infrastructure. During this operation, the first and second DC links are maintained at the first DC voltage.

The OBESSs 12 may be fitted with DC choppers to step down the first DC voltage in order to enable charging of the OBESSs using electrical power from the OHLs. In this way the OBESSs can increase their SoC on electrified sections of the railway line. The OBESS may also be connected directly to the DC link(s).

Furthermore, when the train is actively braking, the control system may operate the first 14a and second 14b traction motors as generators to produce a negative torque contribution. The traction motors thus act as generators to convert kinetic energy of the train into regenerated electrical power. The regenerated electrical power can be fed back to the external power supply infrastructure via the inverter circuits 25a, 25b, the converter circuits 21a, 21b, the transformers 15 and the pantographs 13. However, another option is for the regenerated electrical power from the second traction motors, and optionally the first traction motors, to be stored in the OBESSs 12 to increase their SoC. Yet another option is for the regenerated electrical power from the first traction motors, and optionally the second traction motors, to be dissipated as heat in brake grid resistors (not shown).

When electrical power is applied to the DC links, step changes in voltage and capacitive loads can induce high in-rush currents. To avoid system damage by these high currents, first soft-charging circuits (not shown) can be provided between the main voltage transformers 15 and the converter circuits 21a, 21b to limit the current while the first and second DC links are being charged to achieve the first DC voltage. In particular, the control system can be configured to connect the main voltage transformers to the converter circuits using the first soft-charging circuits when switching from either of the self-powered drive modes to the externally powered drive mode, or when bringing the DC links to the first DC voltage at the beginning of train operation.

In the hybrid mode, electrical power is provided to the first traction motors 14a from the GUs 11. During acceleration phases electrical power is also provided to the second traction motors 14b from the OBESSs 12.

The main voltage transformers 15 are disconnected from the first 21a and second 21b converter circuits and the external current collectors are disconnected from the external power supply infrastructure, for example by lowering the pantographs 13. The VCBs 16 are also opened.

Three-phase AC electrical power generated by the GUs 11 is supplied to the first converter circuits 21a and converted to DC electrical power which is conducted in the first DC links. These are maintained at the first DC voltage. The first inverter circuits 25a invert the DC electrical power to three phase AC power to drive the train using the first traction motors 14a.

DC electrical power outputted by the OBESSs 12 is supplied to the second DC links, which are maintained at the second DC voltage. The DC electrical power is inverted by the second inverter circuits 25b to provide the three phase AC power required by the second traction motors14b.

Second soft-charging circuits may be provided between the OBESSs 12 and their second DC links to limit in-rush current when bringing the DC links to the second DC voltage. For example, the control system can connect the OBESSs to their DC links using the second soft-charging circuits when first charging the DC links to the second DC voltage at the beginning of train operation, or when switching from the externally powered drive mode to either of the self-powered drive modes.

DC electrical power can be provided to neighbouring cars that do not have GUs 11 or OBESSs 12 through the inter-car DC electrical connectors 24. The APSs 22a, 22b have their own inverters and transformers enabling them to receive power at either the first or second DC voltage. In particular, first APS units 22a connected to the first converter-inverter devices receive power at the first DC voltage, and are isolated from second APS units 22b connected to the second converter-inverter devices which receive power at the second DC voltage. Therefore, in the hybrid self-powered drive mode the first APS units 22a and the second APS units 22b receive power at different voltages. However, the transformers within the APS units allow the first and second APS units to provide the same voltage to the auxiliary systems regardless of their input power source.

In the hybrid self-powered drive mode, the control system adjusts the amount of electrical power generated by the GUs 11 and outputted by the OBESSs 12 to achieve target torques for the first 14a and second 14b traction motors. Typically the control system is configured to prioritise the generation of power from the GUs, with torque being mainly provided by the first traction motors. When the GUs and first traction motors are unable to achieve the target torques, the control system demands power from the OBESSs to provide additional torques from the second traction motors. This is most likely to happen during the acceleration phase of a journey when the GUs operate at full power. When the railway vehicle reaches the target velocity, the target torques are reduced and the control system reduces the power demanded from the OBESSs and then the GUs, and the vehicle enters a "cruising" state. If the target torques reduce further to zero (and there is no active braking of the vehicle), "cruising" becomes "coasting".

When active braking of the train is required, one braking option in the hybrid self-powered mode is for the control system to perform regenerative braking. In this case the second traction motors 14b operate as generators to produce a negative torque contribution. The second traction motors thus operate as generators, and kinetic energy of the railway vehicle is converted into regenerated electrical power which is used to charge the OBESSs 12. In this way, the OBESSs can improve fuel consumption by using the regenerated power to provide support to the GUs 11 during acceleration.

However, the diesel engines of GUs 11 of trains operating in the hybrid self-powered drive mode still consume fuel and generate carbon dioxide emissions because the GUs are always running in this mode. In particular, combustion engines consume fuel and produce emissions even when idling. However, the third OBESS-only drive mode enables the GUs to be disabled, reducing overall fuel consumption and emissions for a journey.

Moreover, in the hybrid self-powered drive mode the first DC links and second DC links are operated at the first and second DC voltages and are thus electrically isolated from each other. Therefore, only regenerative power from generator operation of the second traction motors 14b and inverter circuits 25b can be used to charge the OBESSs. Regenerated power from generator operation of the second traction motors 14a and inverter circuits 25a associated with the GUs can be dissipated in brake grid resistors.

In the battery-only mode, the control system disables the GUs 11 and electrical power is provided to the first 14a and second 14b traction motors from the OBESSs 12 alone. Thus, the combustion engines can be powered off, saving fuel and reducing emissions.

DC electrical power outputted by the OBESSs 12 is supplied to the second DC links. These links are therefore maintained at the second DC voltage. The control system brings the second DC links to the second DC voltage using the second soft-charging circuits as part of switching from the externally powered drive mode to the OBESS-only drive mode. The second inverter circuits 25b invert the DC electrical power to three phase AC power to drive the train using the second traction motors 14b.

The control system can perform regenerative braking in which the second traction motors 14b operate as generators to produce a negative torque contribution. The second traction motors thus operate as generators, and kinetic energy of the railway vehicle is converted into regenerated electrical power which is used to charge the OBESSs 12. Similarly, the first traction motors 14a may be operated as generators to perform regenerative braking and increase the state of charge of the OBESSs.

In addition, the control system is configured to close inter-car DC electrical connectors 24along the connecting lines joining the first 22a and second 22b APS units. Thus DC electrical power outputted by a given OBESSs 12 can be shared across more than one APS unit. Accordingly, all the APS units connected in this way are configured to power the auxiliary systems using DC electrical power provided at the second DC voltage. Advantageously, this arrangement allows the GUs 11 to be shut down completely while still ensuring power is provided to all the APS units and essential systems.

Furthermore, the drive system is configured such that electrical power outputted by the OBESSs 12 can be used to drive the first traction motors 14a. Advantageously, this allows the same motive power to be achieved in the OBESS-only drive mode as in the externally powered and hybrid self-powered drive modes. Moreover, the connection of the OBESSs to the first traction motors allows generator operation of the first traction motors and the first inverter circuits 25a to be used to charge the OBESSs during regenerative braking. This arrangement enables more kinetic energy of the train to be recovered during braking and reused by the OBESSs.

For example, in one arrangement, the control system is configured so that the second DC links provide DC electrical power to the first DC links via closure of internal APS contactors of the first APS units 22a. A similar function, however, can be achieved by closure of the DC electrical connectors 24 on the connecting lines between the first APS units 22a and their respective first DC links. In this case, any internal APS contactors of the first 22a and second 22b APS units are kept closed allowing these DC electrical connectors 24 to act as APS contactors managing connecting/disconnecting of the first and second DC-links. Whether the APS contactors are of the internal type or are of external type formed by the DC electrical connectors 24, DC electrical power flows from the second converter-inverter devices associated with the OBESSs 12 to the first converter-inverter devices in the opposite direction to its direction of flow in the other drive modes. Thus the first DC links are maintained at the second DC voltage in the third drive mode, and this DC electrical power is then inverted to three phase AC power by the first inverter circuits 25a to drive the first traction motors 14a. This arrangement allows the OBESSs to provide power to the both the first and second traction motors with little or no additional drive system infrastructure.

However, alternative arrangements may also be possible. For example, the first traction motors 14a may be disabled in the OBESS-only drive mode, or additional inverter circuits may be provided to invert DC electrical power from the OBESSs to AC electrical power in order to directly drive the first traction motors 14a without using the first DC links.

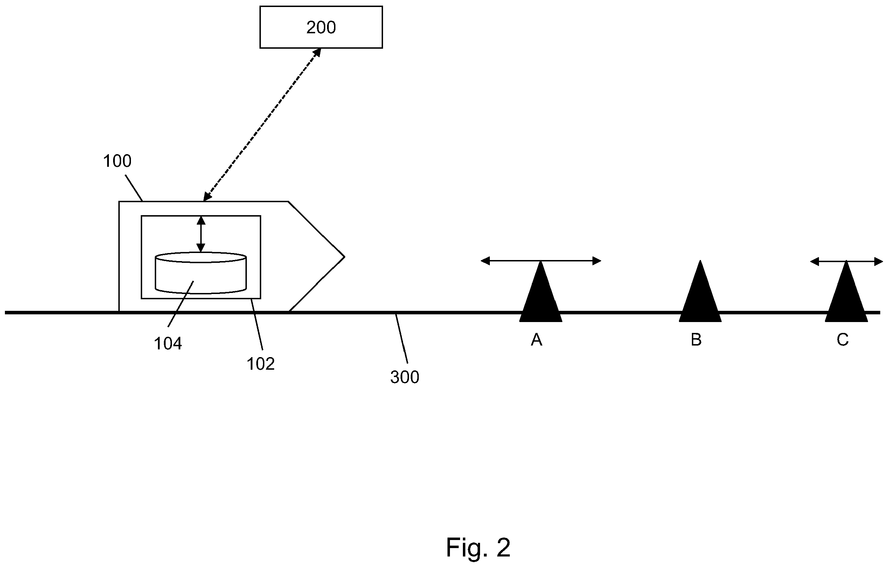

Figure 2 shows a schematic of a system for managing the operation of one or more trains 100 on a railway network 300. The train 100 is connected, via a wireless network for example, to a remote control centre 200. The train includes the control system 102 discussed above, which is configured to operate the drive system of the train each of the two or three power modes discussed. The control system 102 also includes a database 104 which includes entries, referred to as data or operating data, indicating where, on the railway network 300, the drive system is to be operated in a given power mode of the two or three power modes.

For example, the database 104 contains an entry indicating that at position 'A' the drive system is to be operated in battery-only mode. The distance associated with this entry is 1000 metres, and the position 'A' is defined a centre position. Therefore, for 500 metres before and 500 meters after position 'A' it is intended that the drive system will be operated in the battery-only mode. Table 1 below illustrates further entries in the database:

**Table 1**

| Centre position | Operating mode | Distance (m) |
|---|---|---|
| A | Battery | 1000 |
| B | Hybrid | 0 |
| C | Battery | 500 |

In this example then, the drive system is configured to operate in battery-only mode for the 1000 metre length of the railway network with 'A' as it's centre, after which the drive system can operate in any of the power modes until arriving at position `B' whereupon it should operate in hybrid mode. In this example, the drive system is configured to automatically (that is, without any action from the driver) change to the hybrid mode once it leaves the area defined by position 'A' so that the battery charge is conserved. Finally, the drive system is configured to operate in battery-only mode again for the 500 metre length of the railway network with point 'C' at it's centre.

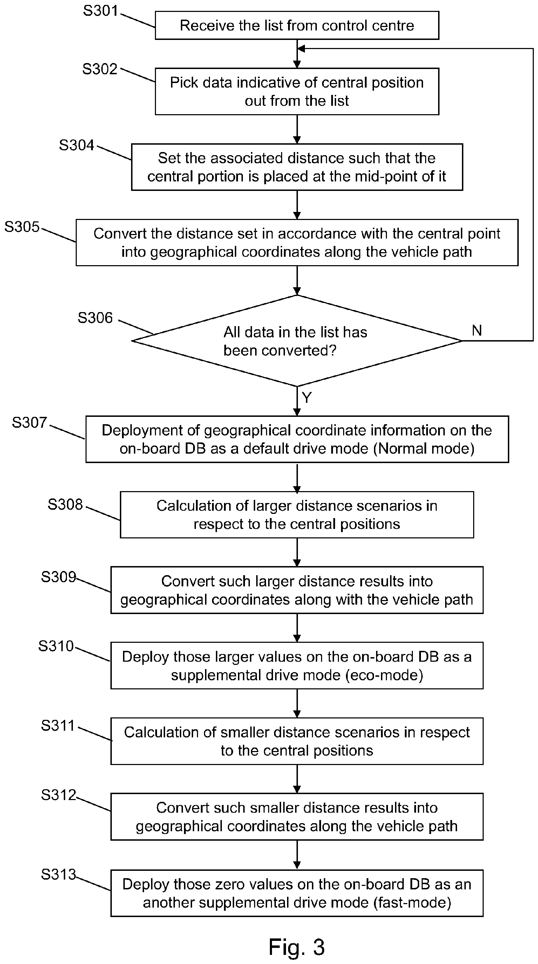

Figure 3 is a flow chart of a method of updating a database on the train. In a first step, S301, a list is received from the remote control centre. The list can take the form of the entries shown in Table 1, that is a list of positions with corresponding operating modes and distances. Next, in step S302, the data indicative of a central position is taken form the list and then, in step S304, the associated distance is set such that the central portion is placed at the mid-point of it. Once this has been done, the distance set in accordance with the central point is converted into geographical coordinates along the vehicle path in step S305. A check is made, in step S306, as to whether all of the data in the list received from the remote control centre has been converted. If not, `N', the method returns to step S302 and another central position is picked from the list. If so, 'Y', the method moves to step S307.

In step S307, the geographical coordinate information is deployed to the on-board database of the train as a default drive mode (or normal mode). This deployment utilises the distance as specified in the list as received from the remote control centre. Next, in step S308, calculation is performed of larger distance scenarios in respect of the central positions in the list. This includes increasing, for example doubling, the distances associated with each position. After these are calculated in step S308, these new larger distances are converted into geographical coordinates along the vehicle path in step S309 before being deployed onto the on-board database as a supplemental driving mode (eco-mode) in step S310.

Next, in step S311, calculation is performed of smaller distance scenarios in respect to the central positions in the list. This includes decreasing, for example to zero, the distances associated with each position. After these are calculated in step S311, these new smaller distances are converted into geographical coordinates along the vehicle path in step S312 before being deployed onto the on-board database as a further supplemental driving mode (fast-mode) in step S313. It should be noted that steps S308 - S307, S308 - 310, and steps S311 - S313 can be performed in either order, or in parallel.

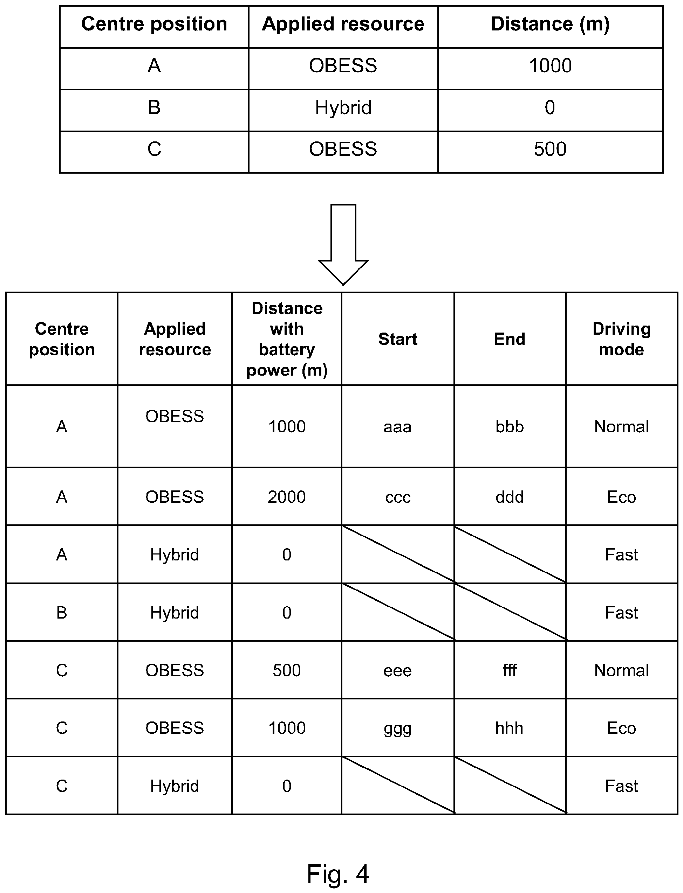

Figure 4 shows two tables containing received data and converted data. The upper table corresponds to Table 1 as discussed above. The lower table corresponds to the converted data stored in the on-board database via the deployment process. As can be seen, for the position 'A' there are three entries each corresponding to a different driving mode. Under the normal driving mode, the distance specified in the list in the upper table is applied to the centre position `A' resulting in a starting location aaa (a label indicative of the geographical position of the start, for example a latitude and longitudinal value) and an end location bbb. Under the eco driving mode, the distance specified in the list in the upper table is doubled (and so is now 2000 metres) resulting in a different starting and ending position. In this example, the fast driving mode is one in which the distance is reduced to zero and so there is no start or end location. In other words, the control system would ignore the request for the drive system to be operated in the battery-only mode and instead operate in a hybrid mode. Turning to the next entry in the list in the upper table, it defines that at centre position B with an associated distance of 0 metres, and so only one entry is needed corresponding to the `fast' driving mode. For position 'C', three entries are created as for position 'A'.

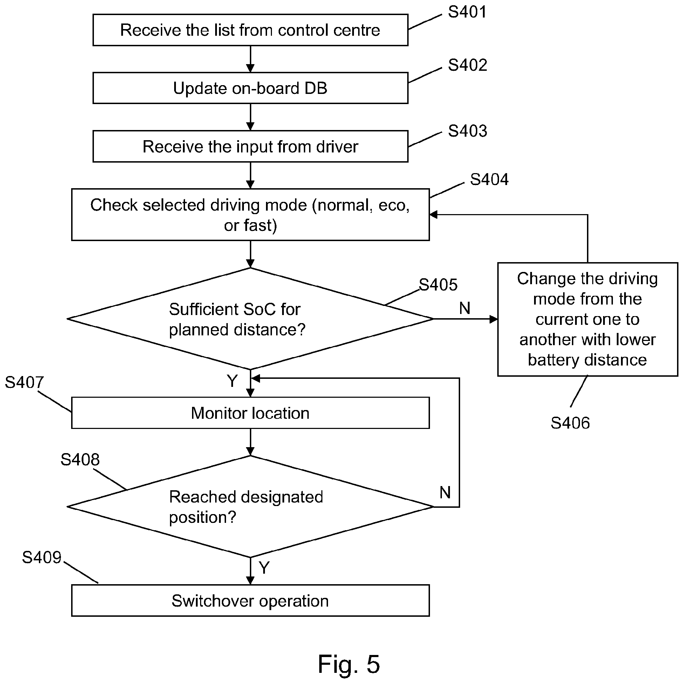

Figure 5 is a flow chart of a method of a switchover sequence of the train. Steps S401 and S402 correspond to the method discussed with respect to Figure 3, where a list is received from the remote control centre and the on-board database is updated. Next, in a step S403, input is received from the driver as to which driving mode is to be implemented. This is then checked in step S404, and a determination is made in step S405 as to whether the state of charge, SoC, of the OBESSs is sufficient for the train to traverse the planned distance. If not, `N', the method moves to step S406 where the driving mode is changed from the current one to another with a lower battery distance. For example, if the current driving mode is "eco" it is changed to "normal" or if the current driving mode is "normal" it is changed to "fast". Once the determination in step S405 is yes, 'Y', the method moves to step S407 where the location of the train is monitored. A further determination is made in step S408 as to whether the train has reached the designated position i.e. the beginning of the region where the train is to operate in the given power mode. If not, `N', the method returns to step S407 and the loop is repeated until it has, 'Y'. When the train is at the designated position, the relevant switchover operation is performed in step S409. For completeness, step S405 and S406 could be performed after step S408.

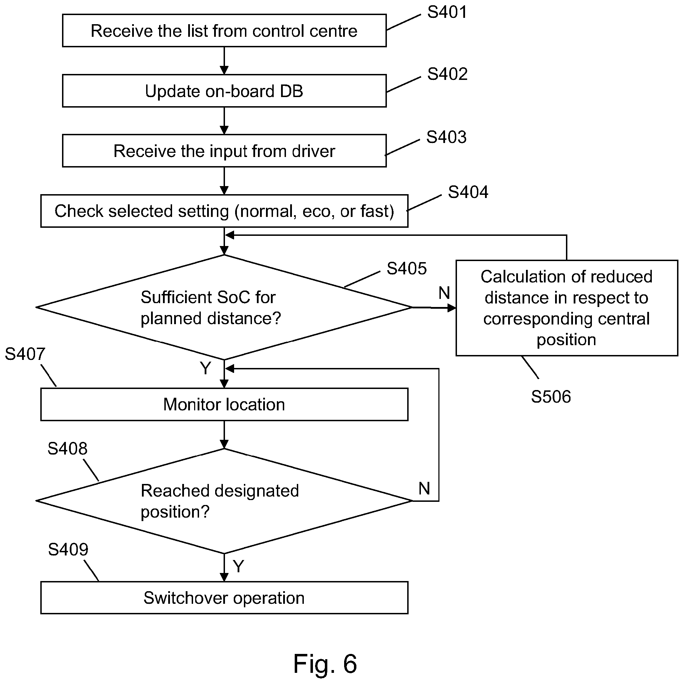

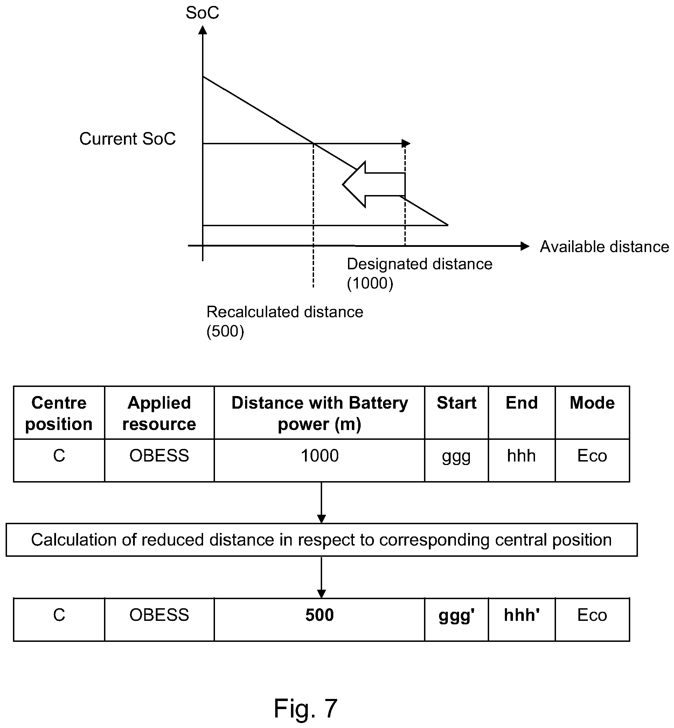

Figure 6 is a flow chart of a variation of the method of Figure 5. Where it shares steps with the method of Figure 5, like steps are indicated by like reference numerals. Where the method in Figure 6 differs is in response to a determination that the state of charge of the OBESSs is insufficient. When such a determination is made, 'N' with respect to step S405, the method moves to step S506 whereupon a reduced distance is calculated with respect to the corresponding central position. Once the determination at step S405 is that the SoC is sufficient for the reduced distance, `Y', the method moves to steps S407 - S409 as above. Figure 7 shows a plot of state of charge against distance illustrating the method of Figure 6, together with a table illustrating the same. As can be seen, the original request of a 1000 metre distance associated with position C cannot be implemented given the current state of charge. Therefore the control system calculates a reduced distance with respect to the position C and arrives at a value of 500 metres.

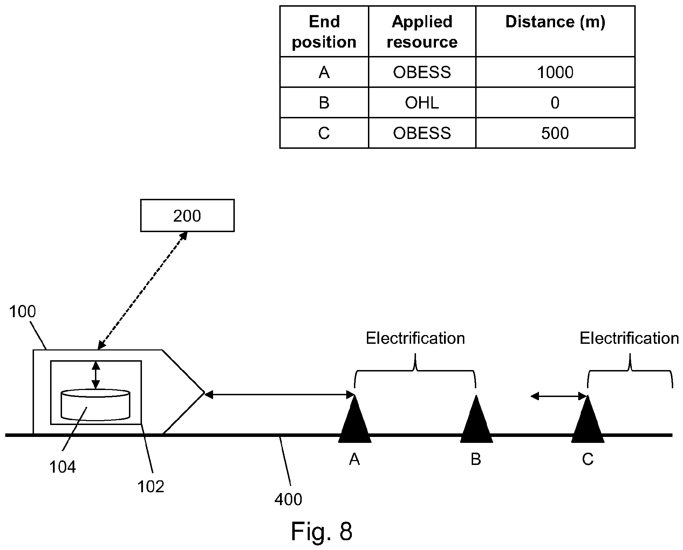

Figure 8 shows the system of Figure 2 where the railway network 400 includes one or more stretches of electrified sections. Here, the list as received from the remote control centre defined an end position (A, B, or C) and an associated distance. The list requests that the control system of the train operate the drive system in battery-only mode for the 1000 metres before point A, after which the drive system can be operated in over-head mode between points A and B. The drive system is then operated in battery-only mode again for the 500 metres prior to point C.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A system for managing the operation of one or more trains on a railway network, the system comprising:
a train including a control system which is configured to operate a drive system of the train in each of two power modes: a hybrid mode in which power is provided to the one or more traction motors from an on-board generator assisted by one or more on-board electrical storage systems and a battery-only mode where power is provided to the one or more traction motors just from the one or more on-board electrical storage systems; and
a remote control centre configured to transmit, to the control system of the train, operating data defining one or more regions of the railway network in which the drive system of train should operate in a given power mode of the two power modes.

2. The system of claim 1, wherein the operating data defining the one or more regions comprises a position and an associated distance from the position.

3. The system of claim 1 or claim 2, wherein the control system on the train, in response to receiving the operating data, is configured to convert the operating data into geographical coordinates along a path of the train.

4. The system of claim 3, wherein the control system is configured to repeat the conversion according to each of a plurality of driving settings; and wherein optionally one of the driving settings is an economical driving setting, in which the control system increases the associated distance from the position before converting the operating data into the geographical coordinates; and/or
wherein one of the driving settings is a fast driving setting, in which the control system decreases the associated distance from the position before converting the operating data into the geographical coordinates; and/or
wherein one of the driving settings is a normal driving setting, in which the control system converts the operating data into the geographical coordinates without modifying the associated distance from the position.

5. The system of any preceding claim, wherein the control system in the train is configured to determine whether a state of charge of the one or more electrical storage systems is sufficient for the train to traverse a region in which it should operate in the battery-only mode according to the operating data.

6. The system of claim 5, wherein either:
the control system is further configured, after determining that the state of charge is insufficient to traverse the region in battery-only mode, to operate the train in the hybrid mode; or
the control system is further configured, after determining that the state of charge is insufficient, to calculate a new region, from the data defining the one or more regions, in which the train should operate in the battery-only mode, the new region having the same position but a shortened distance from the position.

7. A train for travelling on routes with external power supply infrastructure and on routes without external power supply infrastructure, the train including a control system configured to operate a drive system of the train in each of two power modes:
a hybrid mode in which power is drawn from an on-board generator assisted by one or more on-board electrical storage systems, and
a battery-only mode where power is drawn only from the one or more on-board electrical storage systems,
wherein the train includes a database, the database containing data defining one or more regions of the railway network in which the drive system should operate in a given power mode of the two power modes.

8. The train of claim 7, wherein the control system is configured to connect to a remote control centre, and to receive, from the remote control centre, operating data defining further regions of the railway network in which the drive system should operate in a given power mode of the two power modes.

9. The train of claim 8, wherein the control system, in response to receiving the operating data, is configured to convert the operating data into geographical coordinates along a path of the train.

10. The train of claim 9, wherein the control system is configured to repeat the conversion according to each of a plurality of driving settings; and wherein optionally one of the driving settings is an economical driving setting, in which the control system increases the associated distance from the position before converting the operating data into the geographical coordinates; and/or
wherein one of the driving settings is a fast driving setting, in which the control system decreases the associated distance from the position before converting the operating data into the geographical coordinates; and/or
wherein one of the driving settings is a normal driving setting, in which the control system converts the operating data into the geographical coordinates without modifying the associated distance from the position.

11. The train of any of claims 7 - 10, wherein the control system is configured to determine whether a state of charge of the one or more electrical storage systems is sufficient for the train to traverse a region in which it should operate in the battery-only mode.

12. The train of claim 11, wherein either:
the control system is further configured, after determining that the state of charge is insufficient to traverse the region in battery-only mode, to operate the train in the hybrid mode; or
after determining that the state of charge is insufficient to traverse the region in battery-only mode, to calculate a new region, from the data defining the one or more regions, in which the train should operate in the battery-only mode, the new region having the same position but a shortened distance from the position.

13. A remote control centre configured to transmit, to a control system of a train, operating data defining one or more regions of the railway network in which a drive system of the train should operate in a given power mode of two power modes, the two power modes including: a hybrid mode in which power is provided to the one or more traction motors from an on-board generator assisted by one or more on-board electrical storage systems, and a battery-only mode where power is provided to the one or more traction motors just from the one or more on-board electrical storage systems.

14. The remote control centre of claim 13 wherein the operating data defining the one or more regions comprises a position and an associated distance from the position

15. A method of managing the operation of one or more trains on a railway network, a train of the one or more trains, including a control system which is configured to operate a drive system of the train in each of two power modes: a hybrid mode in which power is provided to the one or more traction motors from an on-board generator assisted by one or more on-board electrical storage systems, and a battery-only mode where power is provided to the one or more traction motors just from the one or more on-board electrical storage systems, the method comprising:
transmitting, from a remote control centre to the control system of the train, operating data defining one or more regions of the railway network in which the drive system of train should operate in a given power mode of the two power modes.
